# EUROPÄISCHE PATENTSCHRIFT

(11) **EP 1 771 788 B1**
(45) Veröffentlichungstag und Bekanntmachung des Hinweises auf die Patenterteilung: **02.01.2008**
(21) Anmeldenummer: 04763535.4
(22) Anmeldetag: 27.07.2004
(51) Int. Cl.: G06F 11/20

(54) **VERFAHREN UND VORRICHTUNG ZUR SICHERUNG VON KONSISTENTEN SPEICHERINHALTEN IN REDUNDANTEN SPEICHEREINHEITEN**
METHOD AND DEVICE FOR STORING CONSISTENT MEMORY CONTENTS IN REDUNDANT MEMORY UNITS
PROCEDE ET DISPOSITIF POUR SECURISER DES CONTENUS MEMOIRE CONSISTANTS DANS DES UNITES MEMOIRES REDONDANTES

(43) Veröffentlichungstag der Anmeldung: 11.04.2007
(73) Patentinhaber: NOKIA SIEMENS NETWORKS GMBH & CO. KG, 81541 München (DE)
(72) Erfinder: HUTNER, Franz, 85254 Sulzemoos (DE); PELESKA, Pavel, 82166 Gräfelfing (DE)
(86) Internationale Anmeldenummer: PCT/EP2004/008402
(87) Internationale Veröffentlichungsnummer: WO 2006/010374

(56) Entgegenhaltungen:
- EP-A- 0 460 308
- EP-A- 0 817 053
- EP-A- 1 249 744
- DE-A1- 4 005 321
- US-B1- 6 374 364

## Beschreibung

Die Erfindung betrifft ein Verfahren und eine Vorrichtung zur Sicherung von konsistenten Speicherinhalten in redundant gehaltenen Speichereinheiten innerhalb eines Telekommunikations- bzw. Datenverarbeitungssystems.

Die Wahrscheinlichkeit des Auftretens eines Hardware-Defektes eines typischen Prozessorboards pro Jahr, bestehend aus einer CPU, einem Chip-Set, Hauptspeicher und Peripheriebausteinen, liegt im einstelligen Prozentbereich. Telekommunikationssysteme oder auch sog. Data-Center bestehen i.d.R. aus einer Vielzahl solcher Boards. Typischerweise sind Systeme wie Vermittlungsstellen aus bis zu einigen Hundert solcher Prozessorboards aufgebaut, wodurch die Wahrscheinlichkeit des Ausfalls einer beliebigen Hardware-Komponente bezogen auf den Jahreszeitraum sehr hoch wird. Insbesondere an Telekommunikationssysteme, aber auch in zunehmenden Maße an Datacenter, wird die Forderung nach einer hohen Systemverfügbarkeit gestellt, z.B. nach einer Verfügbarkeit von >99.999% bzw. einer Nichtverfügbarkeit von wenigen Minuten im Jahr. Da üblicherweise der Austausch eines Prozessorboards und die Wiederherstellung des Dienstes im Falle eines Hardwaredefektes i.d.R. im Bereich einiger 10 Minuten bis zu einigen Stunden dauert, müssen für den Fall eines Hardwaredefektes auf Systemebene entsprechende Vorkehrungen getroffen werden um die Forderung nach der Systemverfügbarkeit erfüllen zu können.

Grundsätzlich ist die Forderung nach dieser Art der Verfügbarkeit nur durch redundante Systemkomponenten erfüllbar. Dabei gibt es den Ansatz die Redundanz durch Software-Massnahmen zu kontrollieren, hierbei wird typischerweise eine sog. Middleware eingesetzt, oder den Ansatz, die Redundanz auf der Hardwareebene zu kapseln, so dass diese für die Software transparent ist. Der wesentliche Nachteil der durch Software-Maßnahmen kontrollierten Redundanz ist, dass lediglich diejenige (Applikations-) Software in einem solchen System eingesetzt werden kann, die für dieses besondere Redundanzschema entwickelt wurde. Dies schränkt das Spektrum einsetzbarer (Applikations-) Software erheblich ein. Darüber hinaus ist die Applikationssoftware für Softwareredundanzprinzipien i.d.R. aufwendig zu entwickeln und zu testen.

Insbesondere ist die Steuerungs-Software herkömmlicher Vermittlungssysteme sehr umfangreich (bis einige Millionen Code-Zeilen). Daher ist eine Anpassung dieser Software nur mit sehr hohem Aufwand und Risiko möglich.

Deshalb ist bisher für derartige Vermittlungssysteme eine speziell entwickelte Hardware nötig. Diese unterstützt dann die geforderte Redundanz, so dass bei Ausfällen einzelner Hardware Module genügend Information zum unterbrechungsfreien Weiterbetrieb auf den redundanten Einheiten vorhanden ist. Häufig wird dazu ein automatisch, im Hintergrund immer mitlaufender Kopiermechanismus verwendet, der einen wohl definierten Teil des Arbeitsspeichers einer aktiven SteuerEinheit laufend auf den Speicher einer redundanten Einheit kopiert (häufig reflective Memory' genannt). Die EP 1 249 744 offenbart ein solches System.

Die direkte Folge ist, dass die Steuerungen für Vermittlungsanlagen einen sehr hohen Entwicklungsaufwand erfordern und deren Innovationszyklus meist sehr lang ist. Zunehmend erschweren auch aktuelle Optimierungen in der Entwicklung der Mikroprozessoren wie z.B. schnelle, oft auch proprietäre und geschützte Bussysteme und interne Caches mit write-back Funktion die Implementierung des reflective Memory erheblich.

Es ist Aufgabe der Erfindung die oben genannten Nachteile zu überwinden.

Diese Aufgabe wird durch die Merkmale der unabhängigen Patentansprüche hinsichtlich eines Verfahrens und hinsichtlich einer Steuereinheit gelöst. Weiterbildungen der Erfindung sind in den abhängigen Patentansprüchen angegeben.

Ein wesentlicher Aspekt der Erfindung besteht in einem Verfahren zur Sicherung von konsistenten Speicherinhalten in redundant gehaltenen Speichereinheiten innerhalb eines Telekommunikations- oder Datenverarbeitungssystems, aufweisend mindestens eine aktive Steuereinheit und mindestens eine redundante passive Steuereinheit, die jeweils mit mindestens einer Speichereinheit ausgebildet sind, wobei folgende Schritte ausgeführt werden:
- wenn auf einen virtuellen Speicherbereich in einer Speichereinheit der aktiven Steuereinheit, dessen Speicherinhalt im Falle eines schreibenden Speicherzugriffs in eine Speichereinheit der mindestens einen redundanten passiven Steuereinheit gespiegelt werden soll, schreibend zugegriffen wird, wird eine Spiegelungsroutine aufgerufen, und
- während der Ausführung der Spiegelungsroutine wird der zu schreibende Speicherinhalt in einen Speicherbereich in der Speichereinheit der mindestens einen redundanten passiven Steuereinheit abgelegt,
wobei das Verfahren durch folgende Schritte **gekennzeichnet** ist:
- der Aufruf der genannten Spiegelungsroutine wird durch geeignete Einstellung einer Speicherverwaltungseinheit der aktiven Steuereinheit (aSt) bewirkt, nicht durch expliziten Aufruf aus den laufenden Programmen, und
- der Schreibzugriff auf der aktiven Steuereinheit, der zum Aufruf der Spiegelungsroutine geführt hat, wird in der Spiegelungsroutine erneut auf einen anderen virtuellen Speicherbereich durchgeführt, der auf die gleiche physikalische Adresse abgebildet ist, wie der Speicherbereich, dessen Beschreiben zum Aufruf der Spiegelungsroutine geführt hat.

Zentraler Vorteil der Erfindung ist, dass sich Programme, die keine Vorleistung für Redundanz enthalten, und die sonst nur zusammen mit Spezial-Hardware ein ausfallsicheres, hochverfügbares System bilden, auf nahezu jeder kommerziell erhältlichen Prozessorplattform ablaufen können und dennoch den selben Grad an Hochverfügbarkeit erreichen, wie aufwändige Speziallösungen.

Damit ist auch künftig möglich, ohne hohe Aufwände neue Generationen von Steuerungs-Rechnern einzuführen, d.h. die Innovationszyklen können wesentlich kürzer werden.

Die dynamischen Nachteile durch den Aufruf der Spiegelungsroutine, auch Trap-Routine genannt, wird durch verschiedenes gemildert:
- Trap-Routinen werden nur beim Schreiben auf Seiten ausgelöst, deren Dateninhalte wirklich auf die redundante Einheit gespiegelt werden müssen. Damit sind viele Schreibzyklen für temporäre oder lokale Daten unbeeinflusst und laufen nach wie vor mit voller Performance. Auch alle Lesezugriffe werden nicht gebremst.
- Die Funktion der Trap-Routine kann als Funktionssequenz im Micro Code implementiert werden, was die dynamischen Verluste beim Eintritt und Verlassen der Trap-Routine reduziert.
- Viele Prozessoren bieten ein spezielles Interface für Co-Prozessoren. Die Verdopplung des Speicherzugriffs auf die redundante und aktive Seite könnte nach Anstoß durch die Memory Management Unit auch von einem Co-Prozessor in Hardware realisiert werden. Dadurch entfällt der dynamische Nachteil durch Trap Routine als auch Micro Code Routine.

Gemäß der Erfindung werden im laufenden Betrieb alle Veränderungen des Speichers der aktiven Einheit durch eine Trap-Routine auf die redundante Einheit gespiegelt. Im Fall eines Fehlers kann dann ohne Verlust von Informationen auf die redundante Einheit umgeschaltet werden.

Dieses Verfahren ist aber nur ausreichend, laufende Veränderungen des Speichers auf die redundante Einheit zu spiegeln. Wird jedoch während des Betriebs eine Einheit z.B. wegen eines Defektes ausgetauscht, erreicht man dadurch nicht mehr den identischen Speicherzustand des aktiven Boards. In diesem Fall müssen auch alle statischen Daten, d.h. solche, die im Betrieb nicht mehr verändert werden, zur ausgetauschten redundanten Einheit übertragen werden.

Demnach liegt eine vorteilhafte Ausgestaltung der Erfindung in einem Verfahren, entsprechend der folgenden Abläufe:
- einmaliges, vollständiges Kopieren des Speicherinhalts der Speichereinheit der aktiven Steuereinheit in den Speicherbereich in der Speichereinheit der mindestens einen redundanten passiven Steuereinheit durch eine Kopierroutine nach Austausch oder Inbetriebnahme der passiven Steuereinheit,
- Erhöhen der zu kopierenden Speicheradresse in einer globalen Variable mit jedem Kopiervorgang,
- bei Ausführung der erst genannten Spiegelungsroutine vergleichen der Speicheradresse des zu beschreibenden Speicherbereichs mit der Speicheradresse in der globalen Variable,
- Verzögern der Ausführung der erst genannten Kopierroutine, wenn beim Vergleich die Speicheradressen übereinstimmen.

Dieses Kopieren des statischen Speicherinhalts der aktiven auf die redundante Einheit ist nicht trivial, da während des laufenden Betriebs der aktiven Einheit kopiert werden muss. Also können Daten, während sie gerade durch den Kopiervorgang zur redundanten Einheit übertragen werden, verändert werden. Kopieren wird üblicherweise durch Laden in ein Prozessor-Register und Zurückschreiben realisiert. Nun kann die aktive Einheit gerade dann ein Datum verändern, nachdem es in das Prozessor-Register geladen wurde, aber bevor es auf der redundanten Einheit abgespeichert werden konnte. Die dadurch mögliche Inkonsistenz von Daten auf der aktiven und redundanten Einheit wurde in bisherigen Systemen durch eine geeignete, proprietäre Hardware-Schaltung ausgeschlossen.

Die Notwendigkeit einer speziellen Hardware schließt jedoch den Einsatz von Standard-Baugruppen, wie sie am Markt erhältlich sind, aus. Dadurch verursacht diese Lösung hohe Entwicklungsaufwände, die durch die im Folgenden vorgeschlagene Software-Realisierung entfallen kann.

Zentraler Vorteil der Erfindung ist, dass Systeme bestehend aus Standard-Baugruppen ohne spezielle Redundanz-Unterstützung in Hardware im laufenden Betrieb synchronisiert werden können und so auch nach einem Austausch einer Einheit wieder in einen redundanten Betrieb mit schneller Umschaltmöglichkeit gebracht werden können.

Im Normalbetrieb, wenn ein konsistenter Speicher zwischen aktiver und redundanter Einheit erreicht ist, ist der dynamische Overhead durch das Prüfen der Speicherbereichsvariablen vernachlässigbar.

Ein weitere Aspekt der Erfindung liegt in einer Steuereinheit zur Durchführung des Verfahrens mit einer Speicherverwaltungseinheit (aMM), einem virtuellen Speicherbereich (VSP) und einer physikalischen Speichereinheit (aPS), deren Speicherinhalt im Falle eines schreibenden Speicherzugriffs in eine Speichereinheit mindestens einer weiteren redundanten passiven Steuereinheit (rSt) gespiegelt werden kann,
dadurch gekennzeichnet dass
- die Speicherverwaltungseinheit den Aufruf einer Spiegelungsroutine veranlassen kann, um im Falle eines schreibenden Speicherzugriffs auf den Speicherbereich den Speicherinhalt in einen Speicherbereich in der Speichereinheit der mindestens einen redundanten passiven Steuereinheit zu verdoppeln, und
- die Steuereinheit Mittel umfasst zur Durchführung des Schreibzugriffs, der zum Aufruf der Spiegelungsroutine geführt hat, auf einen anderen virtuellen Speicherbereich, der auf die gleiche physikalische Adresse abgebildet ist, wie der Speicherbereich, dessen Beschreiben zum Aufruf der Spiegelungsroutine geführt hat.

Weitere Vorteile der Erfindung ergeben sich aus den nachstehend beschriebenen, anhand einer Zeichnung erläuterten Ausführungsformen.

Die Zeichnung zeigen:

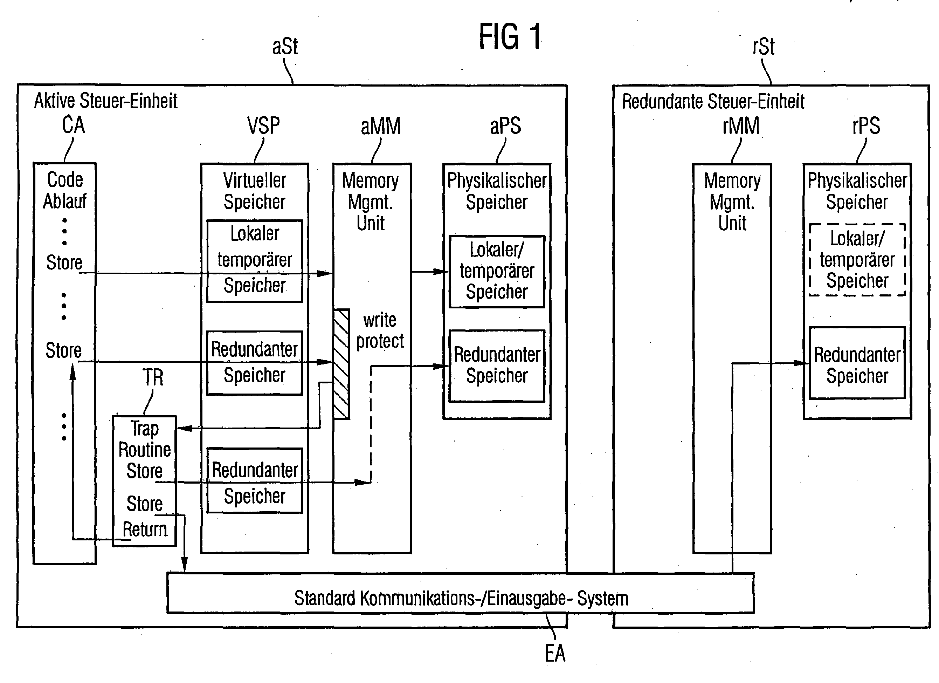

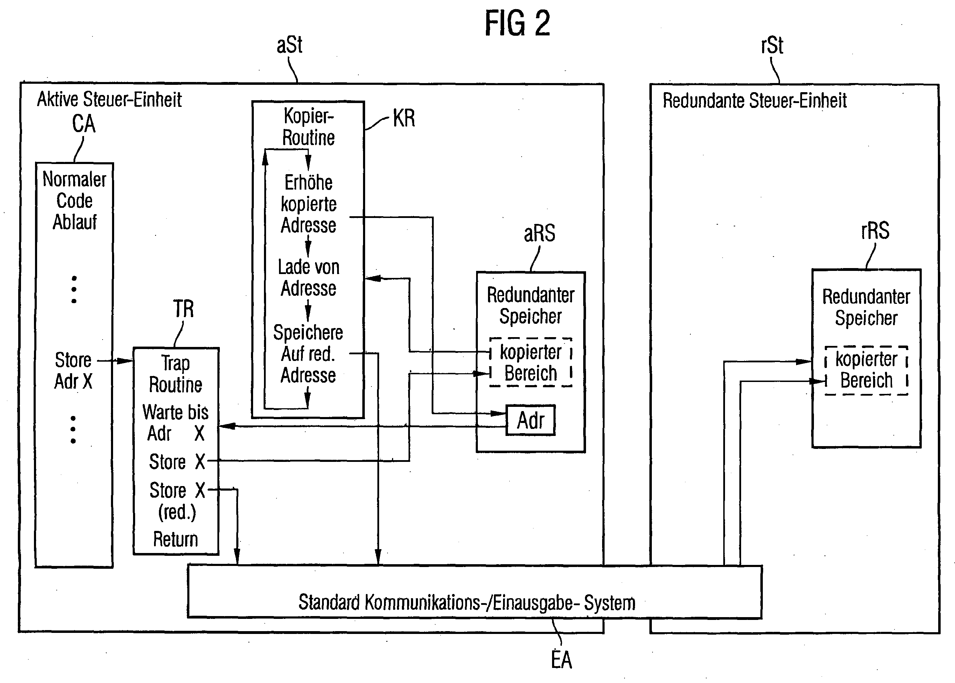

Figur 1 und Figur 2 eine mögliche Architektur der aktiven und redundanten Steuereinheit.

Figur 1 zeigt eine Architektur einer aktiven Steuereinheit innerhalb eines Telekommunikationssystems. Es sind abgebildet ein aktiver Prozessor-Betrieb mit dem Ablauf von Code-Folgen CA, eine sogenannte Trap-Routine TR, eine Speichereinheit mit einem virtuellen Speicherbereich VSP, ein Speichersteuereinheit aMM sowie eine Speichereinheit mit einem physikalischen Speicherbereich aPS, die untereinander kommunizieren (dargestellt durch die Pfeillinien). Des weiteren ist eine redundante Steuereinheit, die eine redundante Speichereinheit rPS umfasst, sowie ein Ein-/Ausgabesystem EA abgebildet, über die die aktive Steuereinheit mit der redundanten Steuereinheit kommuniziert.

In Figur 2 sind nahezu die gleichen Architektureinheiten abgebildet. Die aktive Steuereinheit aST weist zusätzlich eine weitere Kopierroutine KR auf. Redundante Speicherbereiche der aktiven bzw. redundanten Steuereinheit sind mit aRS bzw. rRS gekennzeichnet.

### Figur 1:

Entsprechend der vorgeschlagenen Erfindung werden redundante Einheiten nicht mehr durch Spezial-Hardware mit der aktuellen Kopie des Speicherinhalts der aktiven Einheit versorgt.

Statt dessen werden Funktionen der in allen relevanten Prozessoren vorhandenen Memory Management Unit (d.h. der Speicherverwaltung) verwendet, um zur Laufzeit bei jedem speichernden Zugriff der aktiven Steuereinheit AST überprüfen zu können, ob von dem zu schreibenden Datum auf der redundanten Steuereinheit rST eine Kopie angelegt werden muss.

Dies ist durch Einstellungen der Attribute pro Memory Page (typischerweise 4 Kilo Bytes) auf ,write protected' oder ,read only' möglich.

Greift demnach ein Prozess schreibend auf eine solchen Speicherbereich in der Speichersteuereinheit aMM zu, so wird die Befehlsausführung CA unterbrochen und eine Trap-Routine TR aufgerufen.

Diese Trap-Routine analysiert nun den Speicherbefehl und sorgt dafür, dass dasselbe Datum auf dieselbe Speicheradresse der redundanten Speichereinheit geschrieben wird. Dies kann durch geeignete Standard-Hardware wie z.B. PCI-Express unterstützt sein.

Auch der lokale Schreibvorgang auf der aktiven Steuereinheit muss durchgeführt werden. Dies geschieht am effizientesten durch einen Schreibzyklus auf eine nicht-geschützte Memory Page im virtuellen Adressraum der Virtuellen Speichereinheit VSP, die auf die gleiche physikalische Page in der physikalischen Speichereinheit aPS wie die schreibgeschützte abgebildet wird. Dies wird durch alle bekannten Speichersteuereinheiten aMM ermöglicht.

Nachdem beide Schreibzugriffe auf den lokalen Speicher und auch auf die Speichereinheit rPS der redundanten Steuereinheit erfolgt sind, kehrt die Trap-Routine in die normale Befehlsausführung hinter dem Speicherbefehl (der in der Trap Routine ausgeführt wurde) zurück und der normale Programmablauf wird fortgesetzt.

Zur Verbesserung der dynamischen Eigenschaften kann die beschriebene Funktionalität der Trap Routine auch als Micro Code im Prozessor realisiert sein. In diesem Fall würde durch das Write Protection Flag der Memory Page in der Speichersteuereinheit aMM nicht eine Trap-Routine ausgelöst, sondern direkt die entsprechende Funktionssequenz als Micro Code angestossen, die den Schreibzugriff auf die redundante Steuereinheit doppelt. Dadurch verringert sich der Dynamikverlust durch Eintritt und Verlassen der Trap Routine.

Als weitere Optimierung kann ein Co-Prozessor an den Prozessor angeschlossen werden, der nach Anstoß durch die Speichersteuereinheit aMM die Verdoppelung der Schreibzugriffe sorgt. Damit können Trap Routine als auch Micro Code Routine entfallen.

### Figur 2:

Auf der aktiven Steuereinheit aSt kopiert eine Software- bzw. Kopierroutine KR den Speicher fortlaufend auf die redundante Steuereinheit rSt. Dies geschieht in kleinen, festen Einheiten (z.B. von der Größe einer Cacheline). Gleichzeitig läuft auf allen übrigen Prozessoren der aktiven Steuereinheit der aktive Betrieb. Daraus resultiert der ständige Aufruf von Trap-Routinen TR, die aktuelle Veränderungen des Speicherinhalts auf die redundante Steuereinheit rSt spiegeln.

Um Inkonsistenzen mit den Daten, die von den Trap-Routinen gespiegelt werden, zu vermeiden, wird die Basis-Adresse des gerade kopierten Datenblocks (z.B. cache-line) in einer globalen Variablen abgelegt. Diese globale Variable liegt im gemeinsamen Speicher aRS der aktiven Steuereinheit, alle Prozessoren der aktiven Steuereinheit haben legenden Zugriff (ausser dem Kopierprozess, er schreibt die Basisadresse für jeden zu kopierende Datenblock fort).

Wenn nun auf irgendeinem Prozessor die Trap-Routine bei einem Schreibzugriff auf den Speicher aufgerufen wird, muss in der Trap-Routine die globale Variable mit der Basis-Adresse mit der aktuellen Schreibadresse verglichen werden. Sind die Adressen unterschiedlich (d.h. der Schreibzugriff geht auf einen Bereich, der gerade nicht kopiert wird), kann die Trap-Routine normal durchlaufen und der Schreibzugriff wird auf die Seite der redundanten Steuereinheit gespiegelt. Sollte in der Trap-Routine festgestellt werden, dass der Zugriff auf den Datenblock geht, die gerade auf den Speicher der redundanten Steuereinheit gespiegelt wird, pollt die Trap-Routine solange die globale Variable, bis der Umkopiervorgang beendet ist und die globale Variable auf den nächsten Datenblock weitergezählt wurde. Dann kann die Trap-Routine ebenfalls normal zu Ende laufen.

Auswirkungen auf die dynamische Performance: Das Polling in der Trap-Routine ist selten (nur nötig wenn gerade genau der aktuell kopierte Datenblock beschrieben wird), und das Polling dauert nicht lange (Kopieren eines solchen kleinen Bereiches dauert nicht lange). Allerdings erzeugt die Abfrage der globalen Variablen immer Overhead in der Trap Routine durch den notwendigen Adressvergleich. Die zusätzliche Laufzeit ist aber im Normalbetrieb gering, wenn kein Kopiervorgang des Speichers läuft. In diesem Fall, wenn die globale Variable länger nicht geändert wird, ist sie (wegen der Häufigkeit des Traps) beim Aufruf der Trap-Routine sicher im Cache, und der Vergleich führt nur zu geringem Laufzeit-Overhead. Kritischer ist der Overhead, wenn parallel der Umkopier-Prozess läuft. Dabei wird die Variable laufend geändert, und im Cache ist keine aktuelle Kopie. In diesem Fall muss ein Speicherzugriff auf den Speicher als Overhead der Trap-Routine zum Einlesen der Adresse erfolgen, die in der globalen Variablen steht.

Dieses Prinzip stellt keine besonderen Voraussetzungen an Hardware oder Software eines redundanten Systems. Es muss lediglich die entsprechende Routine zum Umkopieren des Speicherinhalts mit der Steuerung über eine globale Variable, die die aktuell zu kopierende Adresse hält, integriert werden.

## Patentansprüche

1. Verfahren zur Sicherung von konsistenten Speicherinhalten in redundant gehaltenen Speichereinheiten innerhalb eines Telekommunikations- oder Datenverarbeitungs-Systems, aufweisend mindestens eine aktive Steuereinheit (aSt) und mindestens eine redundante passive Steuereinheit (rSt), die jeweils mit mindestens einer Speichereinheit ausgebildet sind, wobei folgende Schritte ausgeführt werden:
- wenn auf einen virtuellen Speicherbereich (VSP) in einer Speichereinheit einer aktiven Steuereinheit (aSt), dessen Speicherinhalt im Falle eines schreibenden Speicherzugriffs in eine Speichereinheit (rPS) der mindestens einen redundanten passiven Steuereinheit (rSt) kopiert werden soll, schreibend zugegriffen wird wird eine Spiegelungsroutine (TR) aufgerufen, und
- während der Ausführung der Spiegelungsroutine (TR) wird der zu schreibende Speicherinhalt in einen Speicherbereich in der Speichereinheit (rPS) der mindestens einen redundanten passiven Steuereinheit (rSt) kopiert,
wobei das Verfahren durch folgende Schritte **gekennzeichnet** ist:
- der Aufruf der genannten Spiegelungsroutine (TR) wird durch geeignete Einstellung Speicherverwaltungseinheit (aMM) der aktiven Steuereinheit (aSt) bewirkt, nicht durch expliziten Aufruf aus den laufenden Programmen (CA), und
- der Schreibzugriff auf der aktiven Steuereinheit, der zum Aufruf der Spiegelungsroutine geführt hat, wird in der Spiegelungsroutine erneut auf einen anderen virtuellen Speicherbereich durchgeführt, der auf die gleiche physikalische Adresse abgebildet ist, wie der Speicherbereich, dessen Beschreiben zum Aufruf der Spiegelungsroutine geführt hat.

2. Verfahren nach dem vorhergehenden Anspruch, **dadurch gekennzeichnet, dass** der genannte virtuelle Speicherbereich vor dem schreibenden Speicherzugriff als schreibgeschützt **gekennzeichnet** ist.

3. Verfahren nach einem der vorhergehenden Ansprüche **gekennzeichnet durch** weitere Schritte:
- einmaliges, vollständiges Kopieren des Speicherinhalts der Speichereinheit der aktiven Steuereinheit (aSt) in den Speicherbereich in der Speichereinheit der mindestens einen redundanten passiven Steuereinheit (rSt) durch eine Kopierroutine (KR) nach Austausch oder Inbetriebnahme der redundanten Steuereinheit (rSt),
- Erhöhen der Speicheradresse in einer globalen Variable mit jedem Kopiervorgang,
- bei Ausführung der Spiegelungsroutine (TR) vergleichen der Speicheradresse des zu beschreibenden Speicherbereichs mit der Speicheradresse in der globalen Variable,
- Verzögern der Ausführung der Spiegelungsroutine (TR), wenn beim Vergleich die Speicheradressen übereinstimmen.

4. Verfahren nach dem vorhergehenden Anspruch, **dadurch gekennzeichnet, dass** die Spiegelungsroutine (TR) fortgesetzt wird, wenn bei einem erneuten Vergleich die Speicheradressen unterschiedlich sind.

5. Verfahren nach dem vorhergehenden Anspruch, **dadurch gekennzeichnet, dass** die Spiegelungsroutine (TR) als Funktionssequenz im Mikroprozessor-Code implementiert ist.

6. Verfahren nach einem der vorhergehenden Ansprüche, **dadurch gekennzeichnet, dass** die Spiegelungsroutine (TR) durch einen Co-Prozessor ausgeführt wird.

7. Steuereinheit (aSt) zur Durchführung des Verfahrens nach einem der vorhergehenden Ansprüche, mit einer Speicherverwaltungseinheit (aMM), Speicherbereich einem virtuellen (VSP) und einer physikalischen Speichereinheit (aPS), deren Speicherinhalt im Falle eines schreibenden Speicherzugriffs in eine Speichereinheit mindestens einer weiteren redundanten passiven Steuereinheit (rSt) kopiert werden kann,
**dadurch gekennzeichnet daß**
- die Speicherverwaltungseinheit den Aufruf einer Spiegelungsroutine (TR) veranlassen kann, um im Falle eines schreibenden Speicherzugriffs auf den Speicherbereich (VSP) den Speicherinhalt in einen Speicherbereich in der Speichereinheit der mindestens einen redundanten passiven Steuereinheit (rSt) zu verdoppeln, und
- die Steuereinheit Mittel umfasst zur Durchführung des Schreibzugriffs, der zum Aufruf der Spiegelungsroutine (TR) geführt hat, auf einen anderen virtuellen Speicherbereich, der auf die gleiche physikalische Adresse abgebildet ist, wie der Speicherbereich, dessen Beschreiben zum Aufruf der Spiegelungsroutine geführt hat.

## Claims

1. Method for securing consistent memory contents in redundantly maintained memory units within a telecommunication or data processing system, having at least one active control unit (aSt) and at least one redundant passive control unit (rSt) which are fashioned respectively with at least one memory unit, wherein the following steps are executed:
- a mirroring routine (TR) is invoked when a virtual memory area (VSP) in a memory unit of an active control unit (aSt), the memory content of which is, in the event of a write memory access, to be copied to a memory unit (rPS) of the at least one redundant passive control unit (rSt), is accessed by writing, and during execution of the mirroring routine (TR), the memory content to be written is copied to a memory area in the memory unit (rPS) of the at least one redundant passive control unit (rSt), wherein the method is
**characterised by** the following steps:
- the invocation of the said mirroring routine (TR) is effected by means of appropriate configuration of a memory management unit (aMM), not by means of explicit invocation from the running programs (CA), and
- the write access on the active control unit which led to the invocation of the mirroring routine is repeated in the mirroring routine to a different virtual memory area which is imaged to the same physical address as the memory area the writing of which led to the invocation of the mirroring routine.

2. Method according to the preceding claim, **characterised in that** the said virtual memory area is **characterised** prior to the write memory access as write-protected.

3. Method according to any one of the preceding claims,
**characterised by** the following steps:
- one-off full copying of the memory content of the memory unit of the active control unit (aSt) to the memory area in the memory unit of the at least one redundant passive control unit (rSt) by means of a copy routine (KR) after replacement or startup of the redundant control unit (rSt)
- incrementing of the memory address in a global variable with each copy process,
- upon execution of the mirroring routine (TR), comparing of the memory address of the memory area to be written with the memory address in the global variable,
- delaying of execution of the mirroring routine (TR) if, in the comparison, the memory addresses match.

4. Method according to the preceding claim, **characterised in that** the mirroring routine (TR) is continued if, in a repeat comparison, the memory addresses differ.

5. Method according to the preceding claim,
**characterised in that** the mirroring routine (TR) is implemented as a sequence of functions in microprocessor code.

6. Method according to any one of the preceding claims,
**characterised in that** the mirroring routine (TR) is executed by means of a co-processor.

7. Control unit (aSt) for carrying out the method as claimed in any one of the preceding claims, comprising a virtual memory area (VSP) and a physical memory unit (aPS), the memory content of which can, in the event of a write memory access, be copied to a memory unit of at least one other redundant passive control unit (rSt), **characterised in that**
- the memory management unit can initiate the invocation of a mirroring routine (TR), in order, in the event of a write memory access to the memory area (VSP), to duplicate the memory content to a memory area in the memory unit of the at least one redundant passive control unit (rSt), and
- the control unit comprises means for carrying out the write access which led to the invocation of the mirroring routine (TR) to another virtual memory area which is imaged to the same physical address as the memory area, the writing of which led to the invocation of the mirroring routine.

## Revendications

1. Procédé pour sécuriser des contenus mémoires consistants dans des unités mémoires maintenues redondantes à l'intérieur d'un système de télécommunication ou de traitement de données, présentant au moins une unité de commande active (aSt) et au moins une unité de commande passive redondante (rSt), qui sont réalisées chacune avec au moins une unité mémoire, les étapes suivantes étant exécutées :
- si on a recours pour l'écriture à une zone mémoire virtuelle (VSP) dans une unité mémoire d'une unité de commande active (aSt), dont le contenu mémoire doit être copié dans le cas d'un accès mémoire de lecture dans une unité mémoire (rPS) de la au moins une unité de commande passive redondante (rSt), on appelle une routine de réflexion (TR) et pendant l'exécution de la routine de réflexion (TR), le contenu mémoire à écrire est copié dans une zone mémoire dans l'unité mémoire (rPS) de la au moins une unité de commande passive redondante (rSt), le procédé étant **caractérisé par** les étapes suivantes :
- l'appel de la routine de réflexion (TR) citée est réalisé par un réglage approprié d'une unité de gestion de mémoire (aMM) de l'unité de commande active (aSt), et non pas par l'appel explicite à partir des programmes en cours (CA), et
- l'accès d'écriture sur l'unité de commande active, qui a abouti à l'appel de la routine de réflexion, est effectué dans la routine de réflexion à nouveau sur une autre zone de mémoire virtuelle, qui est représentée sur la même adresse physique que la zone de mémoire dont l'écriture a abouti à l'appel de la routine de réflexion.

2. Procédé selon la revendication précédente, **caractérisé en ce que** ladite zone mémoire virtuelle est qualifiée de protégée de l'écriture avant l'accès à la mémoire par écriture.

3. Procédé selon l'une quelconque des revendications précédentes, **caractérisé par** d'autres étapes :
- copie unique et complète du contenu mémoire de l'unité mémoire de l'activité de commande active (aSt) dans la zone mémoire dans l'unité mémoire de la au moins une unité commande passive redondante (rSt) par une routine de copie (KR) après le remplacement ou la mise en service de l'unité de commande redondante (rSt),
- augmentation de l'adresse de mémoire dans une variable globale avec chaque opération de copie,
- en cas d'exécution de la routine de réflexion (TR) comparaison de l'adresse de mémoire de la zone de mémoire à écrire avec l'adresse de mémoire dans la variable globale,
- temporisation de l'exécution de la routine de réflexion (TR) si les adresses de mémoire coïncident lors de la comparaison.

4. Procédé selon la revendication précédente, **caractérisé en ce que** la routine de réflexion (TR) est poursuivie si les adresses de mémoires sont différentes lors d'une nouvelle comparaison.

5. Procédé selon la revendication précédente, **caractérisé en ce que** la routine de réflexion (TR) est mise en place comme séquence de fonction dans le code de microprocesseur.

6. Procédé selon l'une quelconque des revendications précédentes, **caractérisé en ce que** la routine de réflexion (TR) est exécutée par un co-processeur.

7. Unité de commande (aSt) pour la mise en oeuvre du procédé selon l'une quelconque des revendications précédentes, comprenant une unité de gestion de mémoire (aMM), une zone de mémoire virtuelle (VSP) et une unité mémoire physique (aPS), le contenu mémoire pouvant être copié dans le cas d'un accès de mémoire d'écriture dans une unité mémoire d'au moins une autre unité de commande passive redondante (rSt), **caractérisée en ce que**
- l'unité de gestion de mémoire peut demander l'appel d'une routine de réflexion (TR), afin de doubler, dans le cas d'un accès de mémoire par écriture à la zone de mémoire (VSP), le contenu mémoire dans une zone mémoire dans l'unité mémoire de la au moins une unité de commande passive redondante (rSt), et
- l'unité de commande comprend des moyens pour la mise en oeuvre de l'accès d'écriture, qui a abouti à l'appel de la routine de réflexion (TR), à une autre zone de mémoire virtuelle, qui est reproduite sur la même adresse physique que la zone mémoire dont l'écriture a abouti à l'appel de la routine de réflexion.
